# EUROPÄISCHE PATENTANMELDUNG

(11) **EP 1 023 985 A1**
(43) Veröffentlichungstag der Anmeldung: **02.08.2000**
(21) Anmeldenummer: 99810069.7
(22) Anmeldetag: 27.01.1999
(51) Int. Cl.: B29C 51/04, B29C 51/22

(54) **Verfahren und Umformstation zur Herstellung kaltverformter Formpackungen**

(71) Anmelder: Alusuisse Technology & Management AG, 8212 Neuhausen am Rheinfall (CH)
(72) Erfinder: Zeiter,Patrik, Zürich (CH); Ziegler,Andreas, 8234 Stetten (CH); Styger,Christian, 8247 Flurlingen (CH); Oster,Heinz, 8245 Feuerthalen (CH); Gerber,Manfred, 78224 Singen (DE); Pasbrig,Erwin Werner, 78224 Singen (DE); Kraus,Harry, 78239 Rielasingen (DE)

(57) **Zusammenfassung**

Bei einem Verfahren zur Herstellung von kaltverformten Formpackungen aus einer bandförmigen, aus einer mit wenigstens einer Kunststofffolie und/oder mit wenigstens einem Kunststoff- bzw. Lackfilm beschichteten Metallfolie aufgebauten Metall-Kunststoff-Verbundfolie wird die Verbundfolie kontinuierlich durch eine Umformstation geführt. In der Umformstation werden mittels Stempeln und Matrizen aus der Verbundfolie Vertiefungen herausgeformt. Die Vertiefungen in der Umformstation werden
(a) mit Stempeln unterschiedlicher Dimension und/oder Geometrie oder
(b) mit einem Stempel mit zunehmender verformungswirksamer Stempellänge oder
(c) mit Luftdruck und/oder Vakuum oder
(d) durch eine beliebige Kombination dieser Umformoperationen.
aus der Verbundfolie herausgeformt. Eine Umformstation ist gekennzeichnet durch eine Walze (10) mit an deren Umfangfläche angeordneten Matrizen (12) und wenigstens zwei Walzen (14,16,18) mit an deren Umfangfläche angeordnete Stempeln (20,22,24), wobei die Walzen achsparallel so zueinander angeordnet sind, dass die Stempel bei Rotation der Walzen in die Matrizen hinein- und aus diesen herausgeführt werden.

## Beschreibung

Die Erfindung betrifft ein Verfahren zur Herstellung von kaltverformten Formpackungen aus einer bandförmigen, aus einer mit wenigstens einer Kunststofffolie und/oder mit wenigstens einem Kunststoff- bzw. Lackfilm beschichteten Metallfolie aufgebauten Metall-Kunststoff-Verbundfolie, wobei die Verbundfolie kontinuierlich durch eine Umformstation geführt wird und in der Umformstation mittels Stempeln und Matrizen aus der Verbundfolie Vertiefungen herausgeformt werden. Im Rahmen der Erfindung liegen auch zur Durchführung des Verfahrens geeignete Umformstationen sowie kaltverformte Formpackungen.

Es ist bekannt, Formpackungen, wie z.B. die Bodenteile von Blisterpackungen, auch Durchdrückpackungen genannt, oder andere Verpackungsbehälter beispielsweise durch Tiefziehen, Streckziehen oder Thermoformen herzustellen. Die Formpackungen können aus thermoplastischen Kunststoffen oder aus Folienverbunden oder Laminaten, wie z.B. Aluminiumfolien mit auflaminierten Kunststoff-Folien oder aufextrudierten Schichten aus thermoplastischen Kunststoffen hergestellt werden.

Werden die Formpackungen aus metallfolienhaltigen Laminaten gefertigt, kann dies mit Umformwerkzeugen aus einem Stempel, einer Matrize und einem Niederhalter erfolgen. Während der Umformung ist das Laminat zwischen der Matrize und dem Niederhalter klemmend festgelegt. Der Stempel greift mit zunehmender Absenkung in die Öffnung der Matrize und verformt dabei das Laminat. Aus dem planen Laminat wird ein Formteil mit Vertiefungen geformt. Die Vertiefungen sind von dem Laminat in der ursprünglichen Planlage entsprechenden Schultern umgeben.

Zur Herstellung von kaltverformten Formpackungen wird heute eine taktweise Umformung mit etwa 20 bis 80 Takten pro Minute mit einem Umformwerkzeug mit typischerweise 1 bis 200 Stempeln durchgeführt.

Zum Stand der Technik gehört auch ein Verfahren der eingangs genannten Art, bei dem zwischen zwei Walzen mit an deren Umfangflächen angeordneten Stempeln bzw. Matrizen ein Streifen mit in ein oder zwei Linien angeordneten Vertiefungen hergestellt werden kann.

Der Erfindung liegt die Aufgabe zugrunde, ein Verfahren der eingangs genannten Art zu schaffen, welches eine kontinuierliche Umformung mit hoher Produktionsgeschwindigkeit ermöglicht. Ein weiteres Ziel der Erfindung liegt in der Bereitstellung von zur Durchführung des erfindungsgemässen Verfahrens geeigneten Umformstationen.

Bezüglich des Verfahrens führt zur erfindungsgemässen Lösung der Aufgabe, dass die Vertiefungen in der Umformstation
- mit Stempeln unterschiedlicher Dimension und/oder Geometrie oder
- mit einem Stempel mit zunehmender verformungswirksamer Stempellänge oder
- mit Luftdruck und/oder Vakuum oder
- durch eine beliebige Kombination dieser Umformoperationen
aus der Verbundfolie herausgeformt werden.

Eine zur Durchführung des erfindungsgemässen Verfahrens geeignete Umformstation ist gekennzeichnet durch eine Walze mit an deren Umfangfläche angeordneten Matrizen und wenigstens zwei Walzen mit an deren Umfangflächen angeordneten Stempeln, wobei die Walzen achsparallel so zueinander angeordnet sind, dass die Stempel bei Rotation der Walzen in die Matrizen hinein- und aus diesen herausgeführt werden.

Eine zweite Umformstation ist gekennzeichnet durch mindestens zwei Paare achsparalleler Walzen, wobei jedes Walzenpaar eine Walze mit an deren Umfangfläche angeordneten Stempeln und eine Walze mit an deren Umfangfläche angeordneten Matrizen aufweist und wobei die Walzen jedes Walzenpaares so zueinander angeordnet sind, dass die Stempel bei Rotation der Walzen in die Matrizen hinein- und aus diesen herausgeführt werden.

Eine dritte Umformstation ist gekennzeichnet durch eine erste Walze mit an deren Umfangfläche angeordneten Stempeln und eine zweite Walze aus elastischem Material, wobei die beiden Walzen achsparallel so zueinander angeordnet sind, dass die Stempel bei Rotation der Walzen unter zeitweiliger Bildung von Matrizen in das elastische Material der zweiten Walze hineingedrückt und aus diesen herausgeführt werden.

Eine vierte Umformstation ist gekennzeichet durch eine Walze mit an deren Umfangfläche angeordneten Stempeln und einem endlosen, umlaufenden Band aus elastischem Material, wobei die Walze achsparallel so zum Band angeordnet ist, dass die Stempel bei Rotation der Walze unter zeitweiliger Bildung von Matrizen in das Band aus elastischem Material hineingedrückt und aus diesem herausgeführt werden.

Eine fünfte Umformstation ist gekennzeichnet durch zwei unter Bildung eines Verformungsspaltes gegeneinander gerichtete, gegensinnig umlaufende, aus einzelnen Blöcken gebildete endlose Raupenketten, wobei über die Länge des Verformungsspaltes die Blöcke der beiden Raupenketten einander paarweise gegenüberliegen und jedes Blockpaar einen ersten Block mit an seiner gegen den zweiten Block gerichteten Blockfläche angeordneten Stempeln und an der gegen den ersten Block gerichteten Blockfläche des zweiten Blocks angeordneten Matrizen aufweist, und wobei die Blöcke jedes Blockpaares so zueinander angeordnet sind, dass die Stempel längs des Verformungsspaltes bei umlaufenden Raupenketten in die Matrizen hinein- und aus diesen herausgeführt werden.

Eine sechste Umformstation ist gekennzeichnet durch eine Walze mit an deren Umfangfläche angeordneten Stempeln und ein endloses Band mit an der Bandoberfläche angeordneten Matrizen, wobei Walze und Band so zueinander angeordnet sind, dass die Stempel bei Rotation der Walze und des Bandes in die Matrizen hinein- und aus diesen herausgeführt werden.

Eine siebte Umformstation ist gekennzeichnet durch eine Walze mit an deren Umfangfläche angeordneten Stempeln oder Matrizen und einer Platte mit an der Plattenoberfläche angeordneten Stempeln oder Matrizen, wobei die Walze achsparallel so zur Platte angeordnet ist, dass die Stempel bzw. Matrizen der Walze mit den Matrizen bzw. Stempeln der Platte in Eingriff bringbar sind, Walze und Platte zum Mitlaufen mit der Verbundfolie zwischen einer Ausgangs- und einer Endposition verschiebbar sind und die Walze in Eingriffstellung mit der Platte rotierbar ist.

Eine achte Umformstation ist gekennzeichnet durch eine erste Walze mit an deren Umfangfläche angeordneten Stempeln oder Matrizen und einer zweiten Walze oder einem endlosen Band mit an der Umfangfläche der zweiten Walze oder des Bandes angeordneten Stempeln oder Matrizen, wobei die erste Walze achsparallel so zur zweiten Walze oder zum Band angeordnet ist, dass die Stempel bzw. Matrizen der ersten Walze mit den Matrizen bzw. Stempeln der zweiten Walze oder des Bandes in Eingriff bringbar sind, Walzen und Band zum Mitlaufen mit der Verbundfolie zwischen einer Ausgangs- und einer Endposition verschiebbar sind und die Walzen und das Band in Eingriffstellung rotierbar sind.

Eine neunte Umformstation ist gekennzeichnet durch eine Vielzahl von paarweise einander gegenüberstehenden Stempeln und Matrizen, wobei die Stempel und Matrizen miteinander in Eingriff bringbar sind und Stempel und Matrizen zum Mitlaufen mit der Verbundfolie zwischen einer Ausgangs- und einer Endposition verschiebbar sind.

Die Stempel der Umformstationen können zur Veränderung der verformungswirksamen Stempellänge gemäss der EP-A-0779143 aus wenigstens zwei teleskopisch ineinander gleitenden Teilstempeln aufgebaut sein.

Zur Veränderung der verformungswirksamen Stempellänge können die Stempel an einer gekrümmten Steuerfläche gleitend angeordnet sein.

Beim Einsatz mehrerer Stempel unterschiedlicher Dimension und/oder Geometrie können die Stempel eine verformungswirksame Oberfläche mit unterschiedlicher Reibung aufweisen. Jeder Stempel wird über eine Vorverformung bis zur maximalen Verformungstiefe gleich oder tiefer als der vorhergehende Stempel in die Matrize hineingeführt.

Ein Stempel mit einer verformungswirksamen Oberfläche hoher Reibung weist zwischen Verbund und Stempeloberfläche eine höhere Reibung auf als ein Stempel mit einer verformungswirksamen Oberfläche niedriger Reibung. Stempel mit einer verformungswirksamen Oberfläche unterschiedlicher Reibung lassen sich insbesondere auch bei dem oben erwähnten, aus wenigstens zwei teleskopisch ineinander gleitenden Teilstempeln aufgebauten Stempel realisieren.

Eine Oberfläche mit hoher Reibung kann beispielsweise Metalle, wie Stahl, oder geschäumte Keramikstoffe oder Kunststoffe, wie Polyacetal (POM), Polyethylen, Gummi, Hartgummi oder Kautschuke, einschliesslich Acrylpolymerisaten, enthalten oder aus diesen Stoffen bestehen. An Oberflächen von Metallen können durch Behandeln, wie Aufrauhen, die Eigenschaften für eine hohe Reibung verliehen werden.

Eine Oberfläche mit niedriger Reibung kann beispielsweise Metalle, wie Stahl, oder Kunststoffe, wie Polytetrafluorethylen, Polyoxymethylen (Polyacetal POM), Polyethylen oder Polyethylenterephtalat enthalten oder daraus bestehen. Die Schicht niedriger Reibung kann auch zwei oder mehrere der beispielhaft genannten Kunststoffe in Mischung oder einen oder mehrere der Kunststoffe im Gemisch mit zusätzlichen in verteilter Form vorliegenden Hartstoffen, wie Gläser in Kugelform, aufweisen. Anstelle der Kunststoffe können andere Werkstoffe als Schicht mit niedriger Reibung in Frage kommen. Dies sind beispielsweise Metalle, wie Aluminium oder Chromstahl, insbesondere auch mit polierten Oberflächen. Weitere Oberflächenschichten mit niedriger Reibung, wie keramische Schichten oder graphit-, bornitrid- oder molybdänsulfidhaltige Schichten sind verwendbar.

Die Oberfläche mit der gewünschten Reibung kann als Beschichtung auf einem Trägermaterial aufgebracht oder die entsprechend behandelte Oberfläche des Trägermaterials selbst sein.

Als Metall-Kunststoff-Verbundfolien können beispielsweise Verbunde, enthaltend eine Metallfolie in einer Dicke von 8 µm bis 150 µm und bevorzugt 20 bis 80 um, angewendet werden. Die Folie kann aus z.B. Stahl, Eisen, Kupfer und bevorzugt aus Aluminium sein. Mitumfasst sind auch Metallfolien aus Legierungen, enthaltend im überwiegenden Masse eines der genannten Metalle. Bevorzugte Folien aus Aluminium können beispielsweise aus Aluminium einer Reinheit von wenigstens 98,0 %, zweckmässig 98,3 %, vorteilhaft 98,5 % und insbesondere 98,6 % sein, wobei der Rest auf 100 % die begleitenden Verunreinigungen darstellen. Im weiteren können beispielsweise Aluminiumfolien des Typs AlFeSi oder des Typs AlFeSiMn angewendet werden.

Als Kunststoffe können beispielsweise Schichten, auch in der Form von Lackfilmen, sowie Folien oder Folienverbunde, wobei die Folien und Folienverbunde auch monoaxial oder biaxial verstreckt sein können, aus thermoplastischen Kunststoffen der Reihen der Polyolefinen, Polyamide, der Polyester, des Polyvinylchlorids und weiterer angewendet werden.

Typische Beispiele von thermoplastischen Kunststoffen sind aus der Reihe der Polyolefine Polyethylene, wie MDPE, HDPE, mono- und biaxial verstreckte Polyethylene, Polypropylene, wie cast-Polypropylen und mono- oder biaxial verstreckte Polypropylene, oder aus der Reihe der Polyester das Polyethylenterephtalat.

Die Schichtdicke der thermoplastischen Kunststoffe als Schicht, Folie oder Folienverbund in den Metall-Kunststoff-Verbundfolien kann beispielsweise 12 bis 100 um und bevorzugt 20 bis 60 µm betragen.

Die Metallfolien und thermoplastischen Kunststoffe können z.B. durch Kaschieren, Kalandrieren oder Extrusionskaschieren zu Verbundfolien gefügt werden. Zum Verbinden der Schichten können fallweise Kaschierkleber und Haftvermittler angewendet werden und die zu verbindenden Oberflächen können durch Plasma-, Korona- oder Flammvorbehandlung modifiziert werden. Lackfilme können beispielsweise auch durch Aufsprühen auf die Metallfolie aufgetragen werden.

Beispiele von Metall-Kunststoff-Verbundfolien sind Verbunde mit einer ersten Schicht, beispielsweise einer Folie oder einem Folienverbund aus den genannten thermoplastischen Kunststoffen, einer zweiten Schicht in Form einer Metallfolie und einer auf der freien Seite der Metallfolie angebrachten dritten Schicht, einer Siegelschicht aus einem Polyolefin, wie Polyethylen oder Polypropylen oder aus PVC.

Weitere anwendbare Metall-Kunststoff-Verbundfolien können eine erste Schicht, beispielsweise eine Folie oder einen Folienverbund aus den genannten thermoplastischen Kunststoffen, eine zweiten Schicht in Form einer Metallfolie und eine dritten Schicht, beispielsweise eine Folie oder ein Folienverbund oder eine extrudierte Schicht aus den genannten thermplastischen Kunststoffen aufweisen. Weitere Schichten, wie Siegelschichten, können vorgesehen werden.

Die Metall-Kunststoff-Verbundfolien können auf wenigstens einer ihrer Aussenseiten oder auf beiden Aussenseiten eine Siegelschicht, in Form einer siegelbaren Folie oder eines Siegellackes aufweisen. Die Siegelschicht ist bestimmungsgemäss in äusserster Lage innerhalb des Verbundaufbaus angeordnet. Insbesondere kann eine Siegelschicht auf einer Aussenseite der Verbundfolie vorgesehen sein, wobei diese Siegelschicht bei der Formpackung gegen die Inhaltsseite gerichtet sein soll, um das Ansiegeln einer Deckfolie zur Herstellung einer Blisterpackung zu ermöglichen.

Typische Beispiele aus der Praxis von Metall-Kunststoff-Verbundfolien sind:
oPA 25/Al 45 / PVC 60,
oPA 25 / Al 45 / oPA 25,
Al 120/PP50,
oPA 25 / Al 60 / PE 50,
oPA 25/Al 60 / PP 60,
oPA 25 / Al 45 / PVC 100,
oPA 25 / Al 60 / PVC 60,
oPA 25 / Al 45 / PE-beschichtet,
oPA 25/Al 45 / oPA 25,
oPA 25 / Al 60 / PVC 100,
oPA 25/Al 60 / oPA 25 / EAA 50,
PVC 60 / oPA 25 / Al 60 / PVC 60,
PVC 60 / oPA 15 / Al 45 / oPA 15 / PVC 60,
PVC 60 / oPA 25 / Al 45 / oPA 25 / PVC 60,
oPA 25 / Al 60 / oPVC 30,
oPA 25/Al 60 / oPVC 60,
oPET 25 / Al 60 / oPVC 30,
oPA 25/Al 60 / oPET 25,
oPET 25 / Al 60 / oPET 25,
wobei "o" jeweils für "orientiert", PA für Polyamid, PVC für Polyvinylchlorid, PE für Polyethylen, PP für Polypropylen, PET für Polyethylenterephtalat, EAA für Ethylenacrylsäure und Al für Aluminium steht und die Ziffern die Schicht-, resp. Foliendicke in µm stehen.

Die Erfindung umfasst auch kaltverformte, nach dem erfindungsgemässen Verfahren oder mit einer erfindungsgemässen Umformstation hergestellte Formpackungen, die beispielseweise aus einer der oben genannten Metall-Kunststoff-Verbundfolien sind.

Bei Umformstationen mit Walzen kann es sich als zweckmässig erweisen, wenn die Umformflächen der Walzen zur Verbesserung der Klemmung der Verbundfolie querschnittlich als Polygon ausgebildet sind.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine erste Ausführungsform einer Umformstation mit vier Walzen;
- Fig. 2 eine zweite Ausführungsform einer Umformstation mit drei Walzenpaaren;
- Fig. 3 eine dritte Ausführungsform einer Umformstation mit einer Walze aus elastischem Material;
- Fig. 4 eine vierte Ausführungsform einer Umformstation mit einem endlosen umlaufenden Band aus elastischem Material;
- Fig. 5 eine fünfte Ausführungsform einer Umformstation mit zwei endlosen Raupenketten;
- Fig. 6 eine sechste Ausführungsform einer Umformstation mit einer mitlaufenden Walze und einer Platte;
- Fig. 7 eine siebte Ausführungsform einer Umformstation mit einem mitlaufenden Walzenpaar;
- Fig. 8 eine achte Ausführungsform mit einer Walze und einem endlosen umlaufenden Band;
- Fig. 9 eine Anordnung von zwei Umformstationen;
- Fig. 10 eine neunte Ausführungsform einer Umformstation mit einer Walze und einem endlos umlaufenden Band;
- Fig. 11 eine zehnte Ausführungsform einer Umformstation mit zwei Walzen;
- Fig. 12 eine elfte Ausführungsform einer Umformstation zum Verformen mittels Druckluft.

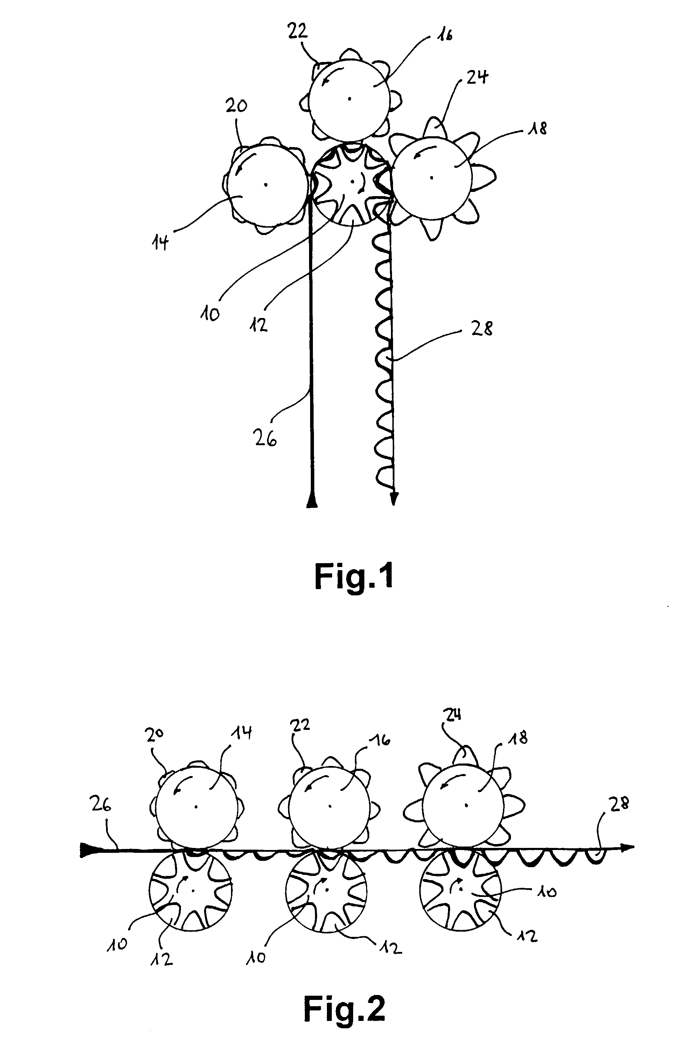

Eine in Fig. 1 dargestellte Umformstation umfasst eine Walze 10 mit an deren Umfangfläche angeordneten Matrizen 12. Der zentral angeordneten Walze 10 sind achsparallele Walzen 14, 16, 18 mit Stempeln 20, 22, 24 so zugeordnet, dass die Stempel 20, 22, 24 der Walzen 14, 16, 18 bei Rotation der Walzen in die Matrizen 12 der zentralen Walze 10 hinein- und aus diesen wieder herausgeführt werden. Die wirksame Länge der Stempel 20, 22, 24 -- d.h. deren Eindringtiefe in die Matrizen 12 der Walze 10 -- ist so gewählt, dass eine Metall-Kunststoff-Verbundfolie 26 bei ihrem Durchlauf zwischen der Walze 10 und den um diese angeordneten Walzen 14, 16, 18 zunehmend getieft wird. In Fig. 1 ist die unterschiedliche Stempellänge beispielhaft dargestellt. Die Länge der Stempel 22 der zweiten Walze 16 ist grösser als die Länge der Stempel 20 der ersten Walze 14, die Länge der Stempel 24 der dritten Walze 18 ist grösser als die Länge der Stempel 16 der zweiten Walze 22. Die zunehmende Tiefe der Verformung der Verbundfolie 26 beim Durchlauf durch die Anordnung der Walzen 10, 14, 16, 18 führt zu den gewünschten Vertiefungen 28. Das Füllen und Siegeln der so hergestellten Formpackung sowie deren endgültiger Zuschnitt erfolgt in bekannter Art mit Verfahren und Vorrichtungen nach dem Stand der Technik.

Neben der verformungswirksamen Stempellänge können die Stempel 20, 22, 24 auch eine unterschiedliche Geometrie und ihre verformungswirksame Oberfläche unterschiedlich hohe Reibung aufweisen. Die Vorteilhaftigkeit verschiedener Stempelformen sowie unterschiedlicher Reibung der verformungswirksamen Oberfläche sind ausführlich in der EP-A-0779143 beschrieben. Auf den in der genannten Patentanmeldung offenbarten Stand der Technik wird ausdrücklich Bezug genommen.

Fig. 2 zeigt eine Variante der Umformstation von Fig. 1. Anstelle einer zentralen Walze sind hier achsparallele Walzenpaare hintereinander angeordnet, wobei jeder der Walzen 14, 16, 18 mit den Stempeln 20, 22, 24 eine Walze 10 mit den Matrizen 12 zugeordnet ist.

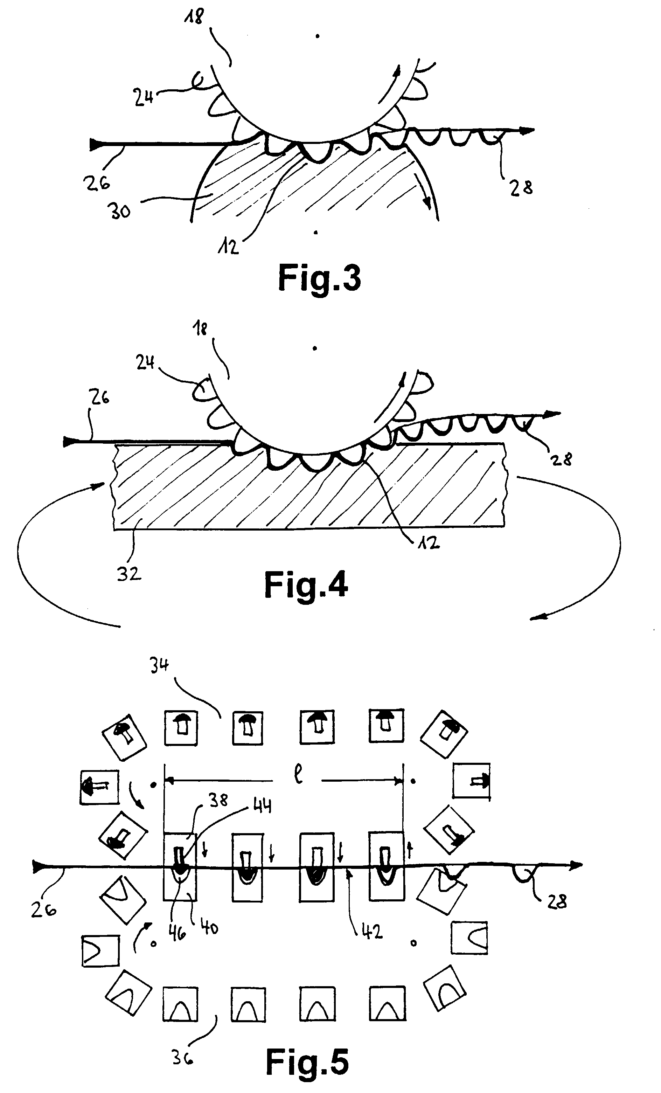

Fig. 3 zeigt die Anordnung einer Walze 18 mit Stempeln 24. Die Walze 18 liegt achsparallel einer weichen Gummiwalze 30 mit glatter Oberfläche an. Bei Rotation der Walze 18 drücken die Stempel 24 die Verbundfolie 26 unter zeitweiliger Bildung von Matrizen im elastischen Gummimaterial in die Oberfläche der Gummiwalze 30.

Fig. 4 zeigt eine alternative Ausführungsform von Fig.3. Anstelle der weichen Gummiwalze 30 ist hier ein weiches, endloses, umlaufendes Gummiband 32 angeordnet. Beim Durchlauf der Verbundfolie 26 zwischen der Walze 18 mit den Stempeln 24 und dem Gummiband 32 erfolgt die Tiefung des Folienmaterials in gleicher Weise wie bei der in Fig. 3 dargestellten Anordnung durch Eindrücken der Verbundfolie 26 mit den Stempeln 24 in die Oberfläche des weichen und elastischen Materials der Gummiwalze 30 bzw. des Gummibandes 32.

Bei der in Fig. 5 dargestellten Ausführungsform einer Umformstation bilden zwei aus einzelnen aneinandergereihten Blöcken 38, 40 endlose Raupenketten 34, 36. Die Raupenketten 34, 36 sind so gegeneinander gerichtet, dass über die Länge 1 einer durch die aneinandergereihten Blöcke 38, 40 gebildeten Verformungsstrecke 42 die Blöcke 38, 40 der beiden Raupenketten 34, 36 einander paarweise gegenüber liegen. Die Blöcke 38 der Raupenkette 34 sind an der gegen die Blöcke 38 der Raupenkette 36 gerichteten Blockfläche Stempel angeordnet. In gleicher Weise sind die den Blöcken 38 gegenüberliegenden Blöcke 40 mit den Stempeln 44 gegenüberliegenden Matrizen 46 angeordnet. Um eine über die gesamte Länge 1 der Verformungsstecke 42 zunehmende Tiefung der Verbundfolie 26 zu erreichen, sind die Stempel 44 aus wenigstens zwei teleskopisch ineinander gleitenden Teilstempeln aufgebaut. Derartige Stempel sind in der EP-A-0779143 ausführlich beschrieben. Anstelle teleskopisch ineinandergreifender Teilstempel können auch einteilige Stempel mit steuerbarem Vorschub zur Einstellung der gewünschten Stempellänge eingesetzt werden. Zur Unterstützung des Verformungsvorgangs kann zur Erzeugung eines Unterdruckes in den Matrizen 46 der Blöcke 40 ein Vakuum angelegt werden. Bei einer weiteren Variante können die Stempel 44 in den Blöcken 38 durch Druckkammern ersetzt sein. In diesem Fall erfolgt die Umformung mittels Druckluft.

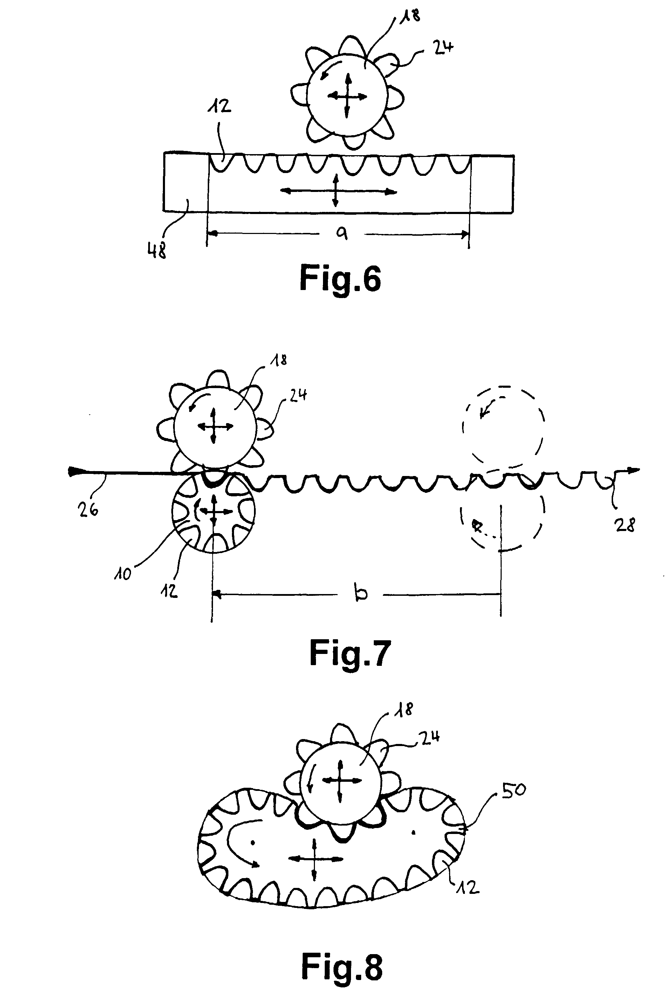

Fig. 6 zeigt eine mit der Verbundfolie mitlaufende Umformstation mit einer Walze 18 und an deren Umfangfläche angeordneten Stempeln 24 sowie einer Platte 48 mit an deren Oberfläche angeordneten Matrizen 12. Die Walze 18 rollt über die Länge a der Platte 48 ab, wobei die Stempel 24 in die Matrizen 12 hinein- und aus diesen wieder herausgeführt werden. Ist das Plattenende erreicht, werden Walze 18 und Platte 48 voneinander getrennt und entgegen der Laufrichtung der Verbundfolie in ihre Ausgangsposition zurückgeführt so dass der Tiefungsvorgang erneut durchgeführt werden kann. Die Bewegungsrichtungen von Walze 18 und Platte 48 sind durch Pfeile dargestellt.

Die in Fig. 7 gezeigte Variante der Umformstation von Fig. 6 weist eine Walze 18 mit an deren Umfangfläche angeordneten Stempeln 24 auf. Eine zweite Walze 10 mit an deren Umfangfläche angeordneten Matrizen 12 ist achsparallel so zur Walze 18 angeordnet, dass die Stempel 24 der Walze 18 bei Rotation der Walzen in die Matrizen 12 der Walze 10 eingreifen. Die beiden Walzen 10, 18 laufen mit der Verbundfolie 26 über eine Strecke b von einer Ausgangslage in eine Endlage, trennen sich und werden in die Ausgangslage zurückverschoben, so dass der nächste Verformungsvorgang erfolgen kann. Der Bewegungsablauf der beiden Walzen 10, 18 ist durch Pfeile dargestellt.

Die in Fig. 8 dargestellte Variante der Umformstation von Fig. 7 weist eine Walze 18 mit an deren Umfangfläche angeordneten Stempeln 24 auf. Ein endlos umlaufendes Band 50 mit an dessen Oberfläche angeordneten Matrizen 12 auf. Das Band 50 hat gegenüber einer Walze 10 den Vorteil einer längeren Verformungsstrecke, da sich das Band 50 im Verformungsbereich der Krümmung der Walze 18 anpasst. Walze 18 und Band 50 laufen mit der Verbundfolie 26 während der Verformung in gleicher Weise mit wie die Ausführungsformen von Fig. 6 und 7. Die Bewegungsrichtungen von Walze 18 und Band 50 sind durch Pfeile dargestellt.

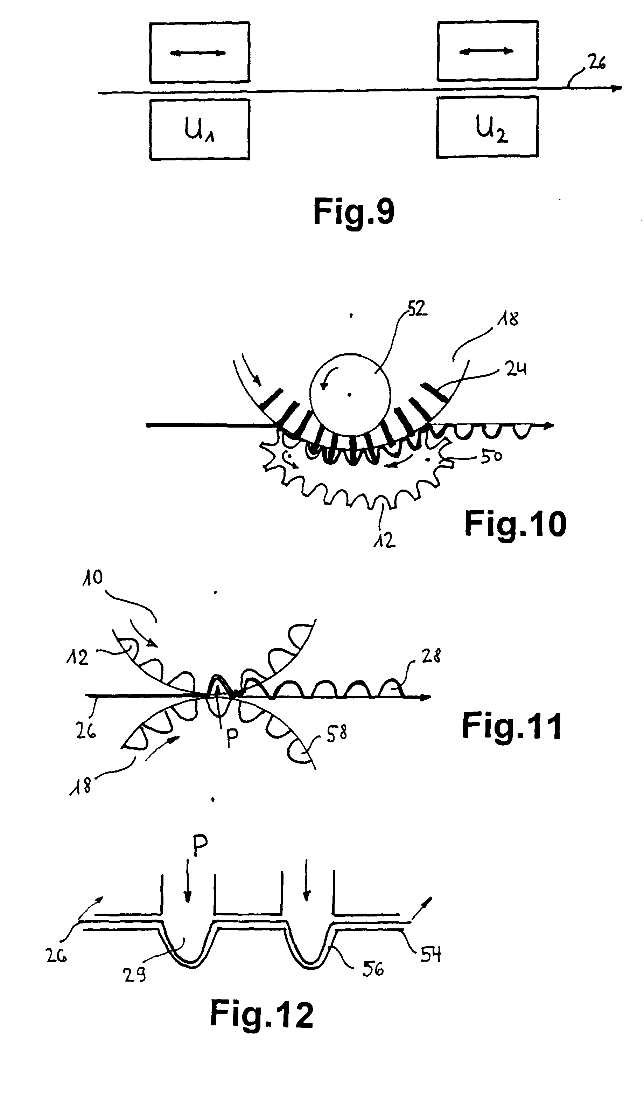

Fig. 9 zeigt generell die Anordnung von zwei Umformstationen U₁ und U₂, die abwechselnd mit der Verbundfolie 26 mitlaufen.

Die in Fig. 10 dargestellte Umformstation umfasst eine Walze 18 mit an deren Umfangfläche angeordneten Stempeln 24. Die Stempel 24 sind in der Walze 18 versenkt angeordnet und treten nur im Verformungsbereich aus der Umfangfläche der Walze 18 hervor. Die Steuerung der Stempel 24 erfolgt über eine im Innern der Walze 18 angeordnete Steuerwalze 52, deren Umfangfläche als Gleitfläche für die Stempel 24 dient. Anstelle der Steuerwalze 52 kann auch eine feststehende Steuerfläche mit entsprechender Krümmung zur Steuerung der Stempel 24 eingesetzt werden. Der Walze 18 liegt im Verformungsbereich ein endlos umlaufendes Band 50 mit an dessen Oberfläche angeordneten Matrizen 12 an. Mittels der Steuerwalze 52 werden die Stempel 24 in die Matrizen 12 hinein und aus diesen wieder herausgeführt.

Die Fig. 11 und 12 zeigen zwei Varianten von Umformstationen, bei denen die Vertiefungen 28 zumindest teilweise mit Druckluft geformt werden. Bei der in Fig. 11 dargestellten Variante sind an der Umfangfläche einer Walze 18 anstelle von Stempeln 24 Vertiefungen 58 angeordnet. Eine zweite Walze 10 mit an deren Umfangfläche angeordneten Matrizen 12 ist achsparallel so zur Walze 18 angeordnet, dass im Bereich der Verformung Vertiefungen 58 Matrizen 12 gegenüberstehen, wobei die zwischenliegende Verbundfolie 28 die Vertiefungen 58 bzw. Matrizen 12 kurzzeitig dicht verschliesst. Durch den Aufbau eines Luftdrucks P in den Vertiefungen 58 wird die Verbundfolie 26 mittels Druckluft als Vertiefungen 28 in der Verbundfolie 26 in die Matrizen 12 hineingeformt.

Bei der in Fig. 12 dargestellten Variante einer Umformstation werden zunächst mittels Druckluft mit Druck P längslaufende Vertiefungen 29 in entsprechend längslaufende Kanäle 56 einer Schiene 54 geformt. Die Bildung einzelner Vertiefungen in der derart vorgeformten Verbundfolie 26 kann beispielsweise mittels einer Walze mit Querstegen durch lokales Eindrücken der längslaufenden Vertiefungen 29 erfolgen. Anstelle einer Verformung mit Druckluft können die längslaufenden Vertiefungen 29 auch durch eine Biegung anstelle einer Tiefung erzeugt werden.

## Patentansprüche

1. Verfahren zur Herstellung von kaltverformten Formpackungen aus einer bandförmigen, aus einer mit wenigstens einer Kunststofffolie und/oder mit wenigstens einem Kunststoff- oder Lackfilm beschichteten Metallfolie aufgebauten Metall-Kunststoff-Verbundfolie, wobei die Verbundfolie kontinuierlich durch eine Umformstation geführt wird und in der Umformstation mittels Stempeln und Matrizen aus der Verbundfolie Vertiefungen herausgeformt werden ,
dadurch gekennzeichnet, dass
die Vertiefungen in der Umformstation
(a) mit Stempeln unterschiedlicher Dimension und/oder Geometrie oder
(b) mit einem Stempel mit zunehmender verformungswirksamer Stempellänge oder
(c) mit Luftdruck und/oder Vakuum oder
(d) durch eine beliebige Kombination dieser Umformoperationen
aus der Verbundfolie herausgeformt werden.

2. Umformstation zur Durchführung des Verfahrens nach Anspruch 1, gekennzeichnet durch eine Walze (10) mit an deren Umfangfläche angeordneten Matrizen (12) und wenigstens zwei Walzen (14,16,18) mit an deren Umfangfläche angeordneten Stempeln (20,22,24), wobei die Walzen achsparallel so zueinander angeordnet sind, dass die Stempel bei Rotation der Walzen in die Matrizen hinein- und aus diesen herausgeführt werden.

3. Umformstation zur Durchführung des Verfahrens nach Anspruch 1, gekennzeichnet durch mindestens zwei Paare achsparalleler Walzen, wobei jedes Walzenpaar eine Walze (14,16,18) mit an deren Umfangfläche angeordneten Stempeln (20,22,24) und eine Walze (10) mit an deren Umfangfläche angeordneten Matrizen (12) aufweist und wobei die Walzen jedes Walzenpaares so zueinander angeordnet sind, dass die Stempel bei Rotation der Walzen in die Matrizen hinein- und aus diesen herausgeführt werden.

4. Umformstation zur Durchführung des Verfahrens nach Anspruch 1, gekennzeichnet durch eine erste Walze (18) mit an deren Umfangfläche angeordneten Stempeln (24) und eine zweite Walze (30) aus elastischem Material, wobei die beiden Walzen achsparallel so zueinander angeordnet sind, dass die Stempel bei Rotation der Walzen unter zeitweiliger Bildung von Matrizen (12) in das elastische Material der zweiten Walze (30) hineingedrückt und aus diesem herausgeführt werden.

5. Umformstation zur Durchführung des Verfahrens nach Anspruch 1, gekennzeichnet durch eine Walze (18) mit an deren Umfangfläche angeordneten Stempeln (24) und ein endloses, umlaufendes Band (32) aus elastischem Material, wobei die Walze achsparallel so zum Band angeordnet ist, dass die Stempel bei Rotation der Walze unter zeitweiliger Bildung von Matrizen (12) in das Band (32) aus elastischem Material hineingedrückt und aus diesem herausgeführt werden.

6. Umformstation zur Durchführung des Verfahrens nach Anspruch 1, gekennzeichnet durch zwei unter Bildung einer Verformungsstecke (42) gegeneinander gerichtete, gegensinnig umlaufende, aus einzelnen Blöcken (38,40) gebildete endlose Raupenketten (34,36), wobei über die Länge (I) der Verformungsstrecke die Blöcke der beiden Raupenketten einander paarweise gegenüberliegen und jedes Blockpaar einen ersten Block (38) mit an seiner gegen den zweiten Block (40) gerichteten Blockfläche angeordneten Stempeln (44) und an der gegen den ersten Block gerichteten Blockfläche des zweiten Blocks angeordneten Matrizen (46) aufweist, und wobei die Blöcke jedes Blockpaares so zueinander angeordnet sind, dass die Stempel längs des Verformungsspaltes bei umlaufenden Raupenketten in die Matrizen hinein- und aus diesen herausgeführt werden.

7. Umformstation zur Durchführung des Verfahrens nach Anspruch 1, gekennzeichnet durch eine Walze (18) mit an deren Umfangfläche angeordneten Stempeln (24) oder Matrizen (12) und einer Platte (48) mit an der Plattenoberfläche angeordneten Stempeln (24) oder Matrizen (12), wobei die Walze achsparallel so zur Platte angeordnet ist, dass die Stempel bzw. Matrizen der Walze mit den Matrizen bzw. Stempeln der Platte in Eingriff bringbar sind, Walze und Platte zum Mitlaufen mit der Verbundfolie zwischen einer Ausgangs- und einer Endposition verschiebbar sind und die Walze in Eingriffstellung mit der Platte rotierbar ist.

8. Umformstation zur Durchführung des Verfahrens nach Anspruch 1, gekennzeichnet durch eine erste Walze (18) mit an deren Umfangfläche angeordneten Stempeln (24) oder Matrizen (12) und einer zweiten Walze (10) oder einem endlosen Band mit an der Umfangfläche der zweiten Walze oder des Bandes angeordneten Stempeln (24) oder Matrizen (12), wobei die erste Walze achsparallel so zur zweiten Walze oder zum Band angeordnet ist, dass die Stempel bzw. Matrizen der ersten Walze mit den Matrizen bzw. Stempeln der zweiten Walze oder des Bandes in Eingriff bringbar sind, Walzen und Band zum Mitlaufen mit der Verbundfolie zwischen einer Ausgangs- und einer Endposition verschiebbar sind und die Walzen und das Band in Eingriffstellung rotierbar sind.

9. Umformstation zur Durchführung des Verfahrens nach Anspruch 1, gekennzeichnet durch eine Walze (18) mit an deren Umfangfläche angeordneten Stempeln (24) und einem endlosen Band (50) mit an der Bandoberfläche angeordneten Matrizen (12), wobei Walze und Band so zueinander angeordnet sind, dass die Stempel bei Rotation der Walze und des Bandes in die Matrizen hinein- und aus diesen herausgeführt werden.

10. Umformstation zur Durchführung des Verfahrens nach Anspruch 1, gekennzeichnet durch eine Vielzahl von paarweise einander gegenüberstehenden Stempeln und Matrizen, wobei die Stempel und Matrizen miteinander in Eingriff bringbar sind und Stempel und Matrizen zum Mitlaufen mit der Verbundfolie zwischen einer Ausgangs- und einer Endposition verschiebbar sind.

11. Umformstation nach einem der Ansprüche 2 bis 10, dadurch gekennzeichnet, dass die Stempel zur Veränderung der verformungswirksamen Stempellänge aus wenigstens zwei teleskopisch ineinander gleitenden Teilstempeln aufgebaut sind.

12. Umformstation nach einem der Ansprüche 2 bis 10, dadurch gekennzeichnet, dass die Stempel zur Veränderung der verformungswirksamen Stempellänge an einer gekrümmten Steuerfläche gleitend angeordnet sind.

13. Umformstation nach einem der Ansprüche 2 bis 12 mit wenigstens einer Walze, dadurch gekennzeichnet, dass die Umformflächen der Walzen zur Verbesserung der Klemmung der Verbundfolie querschnittlich als Polygon ausgebildet sind.

14. Kaltverformte Formpackung, hergestellt nach dem Verfahren gemäss Anspruch 1 oder mit einer Umformstation nach einem der Ansprüche 2 bis 13, dadurch gekennzeichnet, dass die Formpackung aus einer Metall-Kunststoff-Verbundfolie (26) besteht, vorzugsweise aus einer Verbundfolie mit einem Aufbau enthaltend
oPA 25 / Al 45 / PVC 60,
oPA 25 / Al 45 / oPA 25,
Al 120 / PP 50,
oPA 25 / Al 60 / PE 50,
oPA 25 / Al 60 / PP 60,
oPA 25 / Al 45 / PVC 100,
oPA 25 / Al 60 / PVC 60,
oPA 25 / Al 45 / PE-beschichtet,
oPA 25 / Al 45 / oPA 25,
oPA 25 / Al 60 / PVC 100,
oPA 25/Al 60 / oPA 25 / EAA 50,
PVC 60 / oPA 25 / Al 60 / PVC 60,
PVC 60 / oPA 15 / Al 45 / oPA 15 / PVC 60,
PVC 60 / oPA 25 / Al 45 / oPA 25 / PVC 60,
oPA 25 / Al 60 / oPVC 30,
oPA 25/Al 60 / oPVC 60,
oPET 25 / Al 60 / oPVC 30,
oPA 25 / Al 60 / oPET 25 oder
oPET 25 / Al 60 / oPET 25,
wobei "o" jeweils für "orientiert", PA für Polyamid, PVC für Polyvinylchlorid, PE für Polyethylen, PP für Polypropylen, PET für Polyethylenterephtalat, EAA für Ethylenacrylsäure und Al für Aluminium steht und die Ziffern die Schicht- bzw. Foliendicke in µm stehen.
